# EUROPÄISCHE PATENTSCHRIFT

(11) **EP 1 049 238 B1**
(45) Veröffentlichungstag und Bekanntmachung des Hinweises auf die Patenterteilung: **07.06.2006**
(21) Anmeldenummer: 00100331.8
(22) Anmeldetag: 07.01.2000
(51) Int. Cl.: H02M 1/00

(54) **Elektrische Schaltung insbesondere für einen Frequenzumrichter**
Electronic circuit particularly for a frequency inverter
Circuit électronique en particulier pour un invertisseur de fréquence

(30) Priorität: 30.04.1999 DE 19919670
(43) Veröffentlichungstag der Anmeldung: 02.11.2000
(73) Patentinhaber: ALSTOM Power Conversion GmbH, 12277 Berlin (DE)
(72) Erfinder: Nahrstaedt, Manfred, Dr.Ing., 14163 Berlin (DE); Nowak, Siegfried, Dipl.-Ing., 12277 Berlin (DE)
(74) Vertreter: Schäfer, Wolfgang

(56) Entgegenhaltungen:
- EP-A- 0 519 346
- EP-A- 0 591 915
- DE-A- 4 315 170
- DE-C- 4 331 250
- US-A- 2 320 145
- US-A- 5 886 860
- PATENT ABSTRACTS OF JAPAN Bd. 018, Nr. 003, 6. Januar 1994 (1994-01-06) & JP 05 244787 A (MURATA MFG), 21. September 1993 (1993-09-21)

## Beschreibung

Die Erfindung betrifft eine elektrische Schaltung nach dem Oberbegriff des Anspruchs 1.

Eine derartige elektrische Schaltung ist aus der GB 2320145 A benannt. Dort ist eine vollständige Unterbrechung des Aufladestroms des Kondensators nicht möglich. Dies kann zur Folge haben, dass der Ladewiderstand oder der PTC-Widerstand im Fehlerfall über eine längere Zeitdauer überhitzen und ggf. Feuer fangen.

Bei einem Frequenzumrichter wird der Kondensator vor dem eigentlichen Umrichten über den Ladewiderstand aufgeladen. Zum Schutz des Ladewiderstands vor Überhitzung ist es bekannt, eine Sicherung in Serie zu dem Ladewiderstand anzuordnen, so dass bei einem zu großen Aufladestrom die Sicherung durchschmilzt und damit der Aufladestrom unterbrochen wird.

Es sind Überlastungen des Frequenzumrichters denkbar, bei denen die Amplitude des Aufladestroms nicht größer wird als die Amplitude im Normalbetrieb. Dies hat zur Folge, dass die Sicherung nur mit einer großen Verzögerung oder im Extremfall gar nicht durchschmilzt. Damit der Ladewiderstand eine daraus resultierende, erhöhte Belastung ohne Beschädigung oder gar Zerstörung übersteht, ist es bekannt, den Ladewiderstand überzudimensionieren. Die daraus entstehenden Kosten sind offensichtlich. Ebenfalls erhöht sich der Platzbedarf für die gesamte Schaltung.

Darüberhinaus ist es möglich, dass selbst die vorgenannte überhöhte Dimensionierung des Ladewiderstands im Falle eines Kurzschlusses innerhalb des Frequenzumrichters nicht ausreichend ist, um den Ladewiderstand vor einer Zerstörung zu schützen. Unter anderem für diesen Fall sind elektronische Überwachungen bekannt, die weiteren Schaltungsaufwand und damit weitere Kosten mit sich bringen.

Aufgabe der Erfindung ist es, eine elektrische Schaltung zu schaffen, die einen Schutz des Ladewiderstands gewährleistet, und die einen geringen Schaltungsaufwand und geringe Kosten erfordert.

Diese Aufgabe wird bei einer elektrischen Schaltung der eingangs genannten Art erfindungsgemäß durch die Merkmale des Anspruchs 1 gelöst.

Bei einem Kurzschluss fließt der resultierende hohe Aufladestrom über den Ladewiderstand und den PTC-Widerstand. Der PTC-widerstand wird dadurch schnell erwärmt, so dass sich sein ohmscher Widerstand erhöht. Dies führt zu einer Beaufschlagung der Mittel zur Unterbrechung des Aufladestroms und damit zu einer schnellen Unterbrechung des Aufladestroms. Der Ladewiderstand wird also schnell von dem hohen Aufladestrom befreit, so dass eine Beschädigung oder gar Zerstörung des Ladewiderstands sicher verhindert wird.

Bei einer Überlastung des Ladewiderstands, ohne dass der Aufladestrom wesentlich erhöht ist, wird der PTC-widerstand mit der Zeit erwärmt. Dies führt wiederum zu einer Unterbrechung des Aufladestroms und damit zu einem Schutz des Ladewiderstands.

Der vorstehend beschriebene Schutz des Ladewiderstands wird dabei erreicht, ohne dass hierzu ein besonderer schaltungstechnischer Aufwand erforderlich ist. Insbesondere ist es nicht erforderlich, den Ladewiderstand überzudimensionieren. Dies bringt den wesentlichen Vorteil mit sich, dass der Ladewiderstand einen geringen Platzbedarf besitzt. Auch besondere elektronische Überwachungen sind nicht erforderlich.

Stattdessen ist der in Serie geschaltete PTC-Widerstand ausreichend, um die beschriebenen Vorteile zu erreichen. Bei diesem PTC-Widerstand handelt es sich um ein preisgünstiges und zuverlässiges Bauteil, das keine besonderen Anforderungen an die übrige elektrische Schaltung stellt, und das auch einen geringen Platzbedarf aufweist.

Bei einer vorteilhaften Weiterbildung der Erfindung ist der PTC-Widerstand thermisch mit dem Ladewiderstand gekoppelt. Damit wird bei einer Überlastung des Ladewiderstands der PTC-Widerstand auch durch die in dem Ladewiderstand entstehende Verlustwärme aufgeheizt. Die Unterbrechung des Aufladestroms wird damit früher erreicht, so dass der Schutz des Ladewiderstands ebenfalls früher eintritt.

Bei einer vorteilhaften Ausgestaltung der Erfindung ist als Mittel zur Unterbrechung des Aufladestroms eine in Serie zu dem Ladewiderstand geschaltete Sicherung vorgesehen. Im Falle eines Kurzschlusses oder einer Überlastung des Ladewiderstands wird die Sicherung von dem PTC-Widerstand beaufschlagt. Dies führt zu einem Durchschmelzen der Sicherung und damit zu einem Unterbrechen des Aufladestroms. Bei der Sicherung als solcher handelt es sich um ein preisgünstiges und zuverlässiges Bauteil, das einen geringen Platzbedarf innerhalb der elektrischen Schaltung erfordert.

Besonders vorteilhaft ist es, wenn Schaltmittel vorgesehen sind, wenn die Schaltmittel an der Spannung anliegen, wenn die Schaltmittel parallel zu dem Ladewiderstand und dem PTC-Widerstand und in Serie zu der Sicherung geschaltet sind, und wenn der PTC-Widerstand die Schaltmittel beaufschlagt. Bei einem Kurzschluss oder bei einer Überlastung des Ladewiderstands beaufschlagt der PTC-Widerstand somit die Schaltmittel. Dies führt zu einem Strom, der über die Sicherung, aber nicht über den Ladewiderstand und den PTC-Widerstand fließt. Dieser Strom kann derart groß eingestellt werden, dass die Sicherung in jedem Fall durchschmilzt. Damit ist der Aufladestrom über den Ladewiderstand und den PTC-Widerstand unterbrochen.

Ebenfalls ist es besonders vorteilhaft, wenn eine Zenerdiode vorgesehen ist, dass die Zenerdiode parallel zu dem PTC-Widerstand geschaltet ist, und dass die Schaltmittel in Abhängigkeit von der Zenerdiode schaltbar sind. Bei einer Erwärmung erhöht sich der ohmsche Widerstand des PTC-Widerstands. Dies hat zur Folge, dass die parallel geschaltete Zenerdiode von ihrem gesperrten in ihren leitenden Zustand übergeht. Im leitenden Zustand steuert die Zenerdiode dann die Schaltmittel an und schaltet diese um. Dies bewirkt z.B. das Schmelzen der Sicherung und damit die Unterbrechung des Aufladestroms über den Ladewiderstand.

Bei einer vorteilhaften Weiterbildung der Erfindung ist als Schaltmittel ein Thyristor vorgesehen. Bei dem Thyristor handelt es sich um ein besonders zuverlässiges und preisgünstiges Bauteil. Wie die anderen beschriebenen Bauteile, so erfordert auch der Thyristor einen geringen Platzbedarf innerhalb der elektrischen Schaltung. Ein weiterer Vorteil des Thyristors besteht in seiner einfachen Ansteuermöglichkeit beispielsweise durch die Zenerdiode.

Bei weiteren vorteilhaften Weiterbildungen der Erfindung ist dem PTC-Widerstand eine Schutzdiode parallel geschaltet und/oder es ist in Serie zu dem Ladewiderstand eine Schutzdiode geschaltet. Auf diese Weise werden unerwünschte Zustände, die gegebenenfalls zu Schädigungen von Bauteilen der elektrischen Schaltung führen können, sicher vermieden.

Bei einer vorteilhaften Ausgestaltung der Erfindung ist als Ladewiderstand ein Masse-Widerstand vorgesehen. Bei dem Masse-Widerstand besteht der gesamte Körper desselben aus einer leitfähigen Masse, die dazu geeignet ist, die entstehende Verlustleistung aufzunehmen. Dies bringt den Vorteil mit sich, dass insbesondere im Vergleich zu einem Drahtwiderstand eine höhere Zuverlässigkeit und ein geringerer Platzbedarf erreicht wird.

Bei weiteren vorteilhaften Weiterbildungen der Erfindung ist ein Gleichrichter zur Erzeugung der Spannung vorgesehen und es ist der Gleichrichter insbesondere mittels Thyristoren halbgesteuert. Auf diese Weise kann die Erfindung ohne weiteres auf dreiphasige Anschlüsse erweitert werden.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.
- Figur 1: zeigt einen schematischen Schaltplan eines ersten Ausführungsbeispiels einer erfindungsgemäßen elektrischen Schaltung, und
- Figuren 2a und 2b: zeigen zwei schematische Schaltpläne eines zweiten und eines dritten Ausführungsbeispiels einer erfindungsgemäßen elektrischen Schaltung.

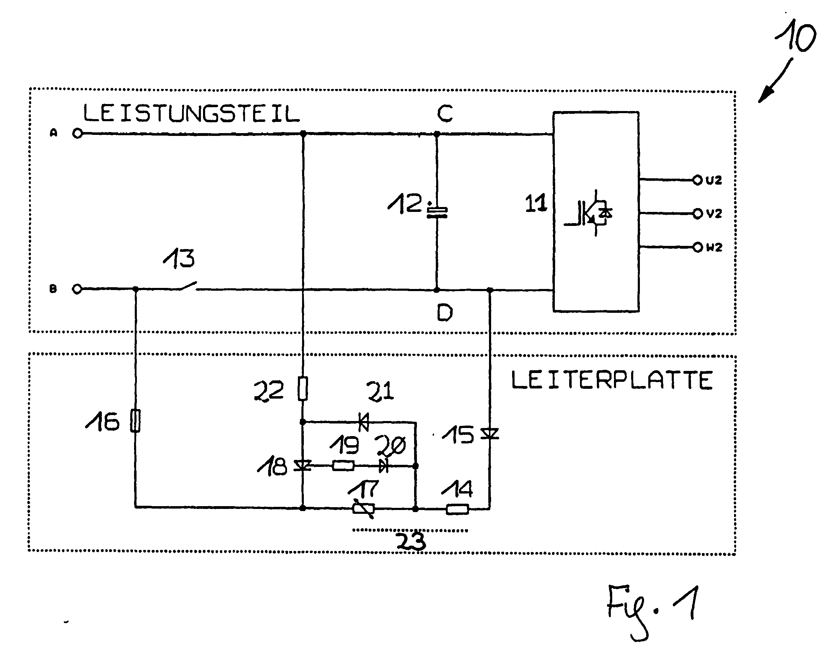

In der Figur 1 ist eine Schaltung 10 dargestellt, die bei einem Gleichspannungszwischenkreis eines Frequenzumrichters einsetzbar ist. An den Eingangsklemmen A, B liegt eine Gleichspannung an, die beispielsweise von einem Gleichrichter zur Verfügung gestellt wird. Ein Wechselrichter 11 erzeugt an seinen Ausgangsklemmen U2, V2, W2 eine Wechselspannung, die in Frequenz und Amplitude veränderbar ist.

Zwischen den Klemmen C, D des Wechselrichters 11 ist ein Kondensator 12 geschaltet. Die Eingangsklemme A ist mit der Klemme C verbunden und stellt den Pluspol dar. Die Eingangsklemme B ist über einen Schütz 13 mit der Klemme D verbunden.

Von der Klemme D des Wechselrichters 11 führt eine Serienschaltung aus einer Schutzdiode 15, einem Ladewiderstand 14, einem PTC-Widerstand 17 und einer Sicherung 16 zu der Eingangsklemme B.

Ein Thyristor 18 ist mit seiner Kathode mit dem Verbindungspunkt des PTC-Widerstands 17 und der Sicherung 16 verbunden. Das Gate des Tyristors 18 ist über einen Gate-Widerstand 19 und eine Zenerdiode 20 mit dem Verbindungspunkt des Ladewiderstands 14 und des PTC-Widerstands 17 verbunden. Die Zenerdiode 20 ist in Richtung zu dem genannten Verbindungspunkt geschaltet. Von demselben Verbindungspunkt ist eine Schutzdiode 21 in Richtung zu der Anode des Thyristors 18 geschaltet. Diese Anode ist ebenfalls über einen Widerstand 22 mit der Eingangsklemme C des Wechselrichters 11 verbunden.

Der Ladewiderstand 14 und der PTC-Widerstand 17 sind thermisch miteinander gekoppelt. Dies ist in der Figur 1 mit der Bezugsziffer 23 gekennzeichnet. Bei dem Ladewiderstand 14 kann es sich beispielsweise um einen sogenannten Masse-Widerstand handeln, bei dem der gesamte Körper desselben aus einer leitfähigen Masse besteht, die dazu geeignet ist, während der Zeitdauer der Aufladung des Kondensators 12 die von dem Aufladestrom bewirkte Verlustleistung aufzunehmen. Der PTC-Widerstand 17 weist einen positiven Temperaturkoeffizienten auf (PTC = positive temperature coefficient), so dass der ohmsche Widerstand des PTC-Widerstands 17 mit steigender Temperatur ebenfalls ansteigt. Der PTC-Widerstand 17 kann beispielsweise mittels eines wärmeleitfähigen Klebers auf dem Ladewiderstand 14 aufgeklebt sein.

Im Normalbetrieb wird der Kondensator 12 vor dem Schließen des Schützes 13 aufgeladen. Dies erfolgt über die Schutzdiode 15, den Ladewiderstand 14, den PTC-Widerstand 17 und die Sicherung 16. Der Ladestrom wird im Wesentlichen durch den Ladewiderstand 14 derart begrenzt, dass die Sicherung 16 nicht durchschmilzt. Der Spannungsabfall und damit die Temperatur des PTC-Widerstands 17 ist im Normalbetrieb derart gewählt, dass die Zenerdiode 20 und damit auch der Thyristor 18 sperrt. Die Schutzdiode 21 ist in Sperrrichtung beaufschlagt.

In einem ersten Fehlerfall wird angenommen, dass bei geöffnetem Schütz 13 beispielsweise ein Kurzschluss auftritt, der einen Strom mit hoher Amplitude über den Ladewiderstand 14 zur Folge hat. Die hohe Amplitude dieses Stroms hat in dem in Serie zu dem Ladewiderstand 14 geschalteten PTC-Widerstand 17 zur Folge, dass dieser sehr schnell erwärmt. Die thermische Kopplung mit dem Ladewiderstand 14 spielt dabei eine nur untergeordnete Rolle. Die Erwärmung wird weitgehend durch die Verlustleistung des PTC-Widerstands 17 selbst erzeugt.

Durch die Erwärmung des PTC-Widerstands 17 erhöht sich dessen ohmscher Widerstand und damit auch der Spannungsabfall an dem PTC-Widerstand 17. Dies führt dazu, dass die Zenerdiode 20 leitend und somit der Thyristor 18 gezündet wird. Durch den Gate-Widerstand 19 wird der Strom in den Thysistor 18 begrenzt.

Über den leitenden Thyristor 18 fließt nunmehr ein Strom von der Eingangsklemme A über den Widerstand 22, den Thyristor 18 und die Sicherung 16 zu der Eingangsklemme B. Der bisher über den PTC-Widerstand 17 fließende Aufladestrom fließt bei leitendem Thyristor 18 über die Schutzdiode 21 und den Thyristor 18. Am PTC-Widerstand 17 verbleibt eine für diesen ungefährliche Restspannung, die etwa den Durchlassspannungen der Schutzdiode 21 und des Thyristors 18 entspricht. Die Schutzdiode 15 sperrt in Gegenrichtung und verhindert damit einen Rückfluss von Strom von der Klemme C über den Widerstand 22, den leitenden Thyristor 18, den PTC-Widerstand 17 und den Ladewiderstand 14 zu der Klemme D und damit ein Entladen des Kondensators 12.

Der Widerstand 22 ist derart klein dimensioniert, dass der Strom über die Sicherung 16 bei gezündetem Thyristor 18 so groß ist, dass die Sicherung 16 sehr schnell durchschmilzt.

In einem zweiten Fehlerfall wird angenommen, dass bei geöffnetem Schütz 13 beispielsweise eine Fehlfunktion des Wechselrichters 11 vorhanden ist. Z.B. ist es möglich, dass die Anzahl der Aufladevorgänge des Kondensators 12 pro Zeiteinheit zu groß ist oder dass zwischen den Eingangsklemmen C, D des Wechselrichters 11 ein Kurzschluss vorhanden ist. Dies stellt eine Überlastung des Ladewiderstands 14 dar.

In diesen Fällen steigt der Strom über den Ladewiderstand 14 und den PTC-Widerstand 17 nicht über die Amplitude des Aufladestroms an. Damit verändert sich die Verlustleistung in dem PTC-Widerstand 17 nicht wesentlich.

Bei diesem Fehlerfall erhöht sich jedoch die Temperatur des Ladewiderstands 14 mit der Zeit. Über die thermische Kopplung des Ladewiderstands 14 und des PTC-Widerstands 17 hat dies auch eine Erwärumung des PTC-Widerstands 17 zur Folge. Diese Erwärmung führt zu der bereits beschriebenen Erhöhung des Spannungsabfalls an dem PTC-Widerstand 17, was schließlich das Durchschmelzen der Sicherung 16 zur Folge hat.

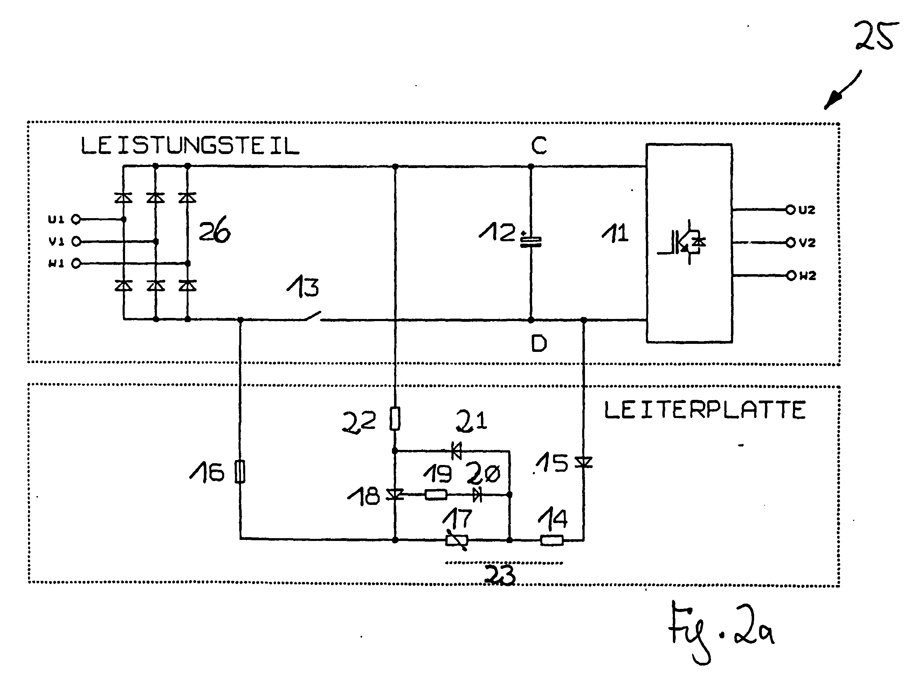

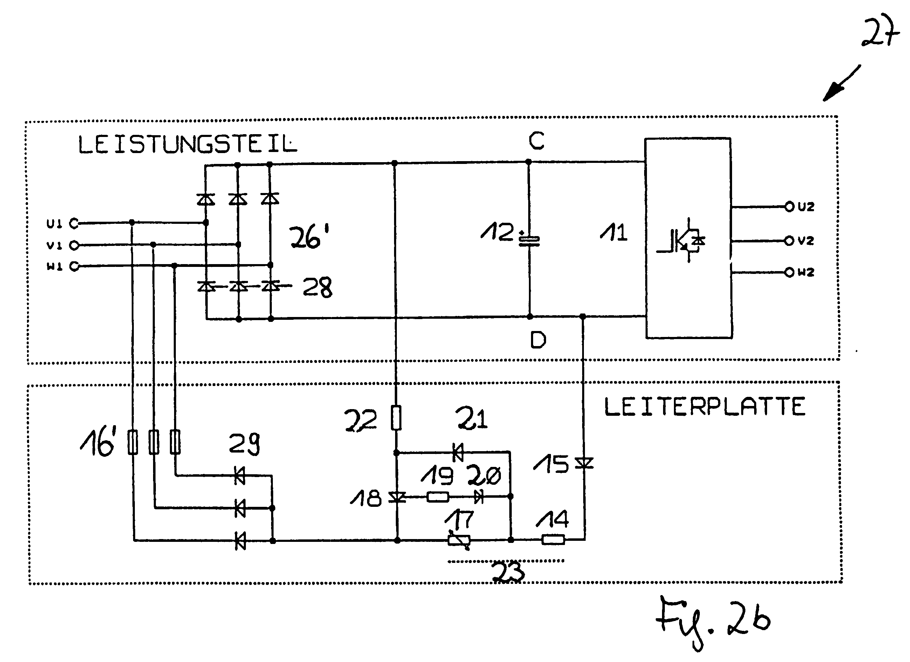

In der Figur 2a ist eine Schaltung 25 dargestellt, die im Wesentlichen der Schaltung 10 der Figur 1 entspricht. Gleiche Bauteile sind deshalb auch mit gleichlautenden Bezugszeichen versehen. Insoweit wird auf die vorstehende Beschreibung der Figur 1 Bezug genommen.

Bei der Figur 2a handelt es sich im Unterschied zu der Figur 1 jedoch um einen Frequenzumrichter mit einem dreiphasigen Anschluss. An den Eingangsklemmen U1, V1, W1 sind damit drei Wechselspannungen vorhanden, die über den Gleichrichter 26 gleichgerichtet werden. Der Schütz 13 dient in der Figur 2a weiterhin dazu, den Frequenzumrichter zu schalten.

In der Figur 2b ist eine Schaltung 27 dargestellt, die im Wesentlichen der Schaltung 10 der Figur 1 und der Schaltung 25 der Figur 2a entspricht. Gleiche Bauteile sind deshalb auch mit gleichlautenden Bezugszeichen versehen. Insoweit wird auf die vorstehenden Beschreibungen der Figuren 1 und 2a Bezug genommen.

Bei der Figur 2b ist jedoch im Unterschied zu der Figur 2a der Schütz 13 nicht mehr vorhanden. Stattdessen ist der Gleichrichter 26' halbgesteuert ausgebildet, was in der Figur 2b mittels der Thyristoren 28 ausgeführt wird. Des Weiteren sind bei der Figur 2b drei Sicherungen 16' und drei dazu serielle Dioden 29 vorhanden, die von dem PTC-Widerstand 17 zu den Eingangsklemmen U1, V1, W1 zurückführen.

## Patentansprüche

1. Elektrische Schaltung (10, 25, 27), insbesondere für einen Frequenzumrichter, mit einem an Spannung (C) liegenden Kondensator (12), der über eine in Serie geschaltete Serienschaltung aus einem Ladewiderstand (14) und einem PTC-Widerstand (17) aufladbar ist, **dadurch gekennzeichnet, dass** Mittel zur Unterbrechung eines Aufladestroms vorgesehen sind, und dass der PTC-Widerstand (17) die Mittel zur Unterbrechung des Aufladestroms beaufschlagt.

2. Schaltung (10, 25, 27) nach Anspruch 1, **dadurch gekennzeichnet, dass** der PTC-Widerstand (17) thermisch mit dem Ladewiderstand (14) gekoppelt ist.

3. Schaltung (10, 25, 27) nach einem der Ansprüche 1 oder 2, **dadurch gekennzeichnet, dass** als Mittel zur Unterbrechung des Aufladestroms eine in Serie zu dem Ladewiderstand (14) geschaltete Sicherung (16, 16') vorgesehen ist.

4. Schaltung (10, 25, 27) nach Anspruch 3, **dadurch gekennzeichnet, dass** Schaltmittel vorgesehen sind, dass die Schaltmittel an einer Spannung (C) anliegen, dass die Schaltmittel parallel zu dem Ladewiderstand (14) und dem PTC-Widerstand (17) und in Serie zu der Sicherung (16, 16') geschaltet sind, und dass der PTC-Widerstand (17) die Schaltmittel beaufschlagt.

5. Schaltung (10, 25, 27) nach Anspruch 4, **dadurch gekennzeichnet, dass** eine Zenerdiode (20) vorgesehen ist, dass die Zenerdiode (20) parallel zu dem PTC-Widerstand (14) geschaltet ist, und dass die Schaltmittel in Abhängigkeit von der Zenerdiode (20) schaltbar sind.

6. Schaltung (10, 25, 27) nach einem der Ansprüch 4 oder 5, **dadurch gekennzeichnet, dass** als Schaltmittel ein Thyristor (18) vorgesehen ist.

7. Schaltung (10, 25, 27) nach einem der Ansprüche 1 bis 6, **dadurch gekennzeichnet, dass** dem PTC-Widerstand (17) eine Schutzdiode (21) parallel geschaltet ist.

8. Schaltung (10, 25, 27) nach einem der Ansprüche 1 bis 7, **dadurch gekennzeichnet, dass** in Serie zu dem Ladewiderstand (14) eine Schutzdiode (15) geschaltet ist.

9. Schaltung (10, 25, 27) nach einem der Ansprüche 1 bis 8, **dadurch gekennzeichnet, dass** als Ladewiderstand (14) ein Masse-Widerstand vorgesehen ist.

10. Schaltung (25, 27) nach einem der Ansprüche 1 bis 9, **dadurch gekennzeichnet, dass** ein Gleichrichter (26, 26') zur Erzeugung der Spannung (C) vorgesehen ist.

11. Schaltung (27) nach Anspruch 10, **dadurch gekennzeichnet, dass** der Gleichrichter (26') insbesondere mittels Thyristoren (28) halbgesteuert ist.

## Claims

1. Electrical circuit (10, 25, 27), particularly for a frequency converter, having a capacitor (12) connected to voltage (C), which capacitor (12) can be charged via a series circuit connected in series comprising a charging resistor (14) and a PTC resistor (17), **characterised in that** means are provided for interrupting a charging current and **in that** the PTC resistor (17) operates the means for interrupting the charging current.

2. Circuit (10, 25, 27) according to claim 1, **characterised in that** the PTC resistor (17) is coupled thermally to the charging resistor (14).

3. Circuit (10, 25, 27) according to either of claims 1 and 2, **characterised in that** what is provided as the means for interrupting the charging current is a fuse (16, 16') connected in series with the charging resistor (14).

4. Circuit (10, 25, 27) according to claim 3, **characterised in that** switching means are provided, **in that** the switching means have a voltage (C) applied to them, **in that** the switching means are connected in parallel with the charging resistor (14) and the PTC resistor (17) and in series with the fuse (16, 16') and **in that** the PTC resistor (17) operates the switching means.

5. Circuit (10, 25, 27) according to claim 4, **characterised in that** a Zener diode (20) is provided, **in that** the Zener diode (20) is connected in parallel with the PTC resistor (14), and **in that** the switching means are switchable in dependence on the Zener diode (20).

6. Circuit (10, 25, 27) according to either of claims 4 and 5, **characterised in that** a thyristor (18) is provided as the switching means.

7. Circuit (10, 25, 27) according to one of claims 1 to 6, **characterised in that** a protective diode (21) is connected in parallel with the PTC resistor (17).

8. Circuit (10, 25, 27) according to one of claims 1 to 7, **characterised in that** a protective diode (15) is connected in parallel with the charging resistor (14).

9. Circuit (10, 25, 27) according to one of claims 1 to 8, **characterised in that** an earthing resistor is provided as the charging resistor (14).

10. Circuit (25, 27) according to one of claims 1 to 9, **characterised in that** a rectifier (26, 26') is provided to generate the voltage (C).

11. Circuit (27) according to claim 10, **characterised in that** the rectifier (26') is half-controlled, in particular by means of thyristors (28).

## Revendications

1. Circuit électrique (10, 25, 27), en particulier pour un convertisseur de fréquence, avec un condensateur (12) relié à la tension (C) qui peut être chargé par le biais d'un circuit en série composé d'une résistance de charge (14) et d'une thermistance PTC (17) câblées en série, **caractérisé en ce qu'**il est prévu des moyens de coupure d'un courant de charge et **en ce que** la thermistance PTC (17) attaque les moyens de coupure du courant de charge.

2. Circuit (10, 25, 27) selon la revendication 1, **caractérisé en ce que** la thermistance PTC (17) est couplée thermiquement à la résistance de charge (14).

3. Circuit (10, 25, 27) selon l'une des revendications 1 ou 2, **caractérisé en ce qu'**il est prévu comme moyens de coupure du courant de charge un fusible (16, 16') câblé en série avec la résistance de charge (14).

4. Circuit (10, 25, 27) selon la revendication 3, **caractérisé en ce qu'**il est prévu des moyens de commutation, **en ce que** les moyens de commutation se trouvent à une tension (C), **en ce que** les moyens de commutation sont câblés en parallèle avec la résistance de charge (14) et la thermistance PTC (17) et en série avec le fusible (16, 16') et **en ce que** la thermistance PTC (17) attaque les moyens de commutation.

5. Circuit (10, 25, 27) selon la revendication 4, **caractérisé en ce qu'**il est prévu une diode Zener (20), **en ce que** la diode Zener (20) est câblée en parallèle avec la thermistance PTC (17) et **en ce que** les moyens de commutation sont commutables en fonction de la diode Zener (20).

6. Circuit (10, 25, 27) selon l'une des revendications 4 ou 5, **caractérisé en ce qu'**il est prévu un thyristor (18) en tant que moyen de commutation.

7. Circuit (10, 25, 27) selon l'une des revendications 1 à 6, **caractérisé en ce qu'**une diode de protection (21) est câblée en parallèle avec la thermistance PTC (17).

8. Circuit (10, 25, 27) selon l'une des revendications 1 à 7, **caractérisé en ce qu'**une diode de protection (15) est câblée en série avec la résistance de charge (14).

9. Circuit (10, 25, 27) selon l'une des revendications 1 à 8, **caractérisé en ce qu'**il est prévu une impédance de masse en tant que résistance de charge (14).

10. Circuit (25, 27) selon l'une des revendications 1 à 9, **caractérisé en ce qu'**il est prévu un redresseur (26, 26') pour générer la tension (C).

11. Circuit (27) selon la revendication 10, **caractérisé en ce que** le redresseur (26') est semi-commandé, en particulier au moyen de thyristors (28).
